# EUROPEAN PATENT SPECIFICATION

(11) **EP 3 342 529 B1**
(45) Date of publication and mention of the grant of the patent: **24.03.2021**
(21) Application number: 17205765.5
(22) Date of filing: 06.12.2017
(51) Int. Cl.: C23C 4/10, C23C 4/134, C23C 4/18, B23K 35/30, B23K 35/32, B23K 35/02, C22C 29/08, B22F 3/115

(54) **MATERIAL, ARTICLE, AND METHOD FOR FORMING ARTICLE WITH TUNGSTEN SEMICARBIDE**
MATERIAL, ARTIKEL UND VERFAHREN ZUR HERSTELLUNG EINES ARTIKELS MIT DIWOLFRAMCARBID
MATÉRIAU, ARTICLE ET PROCÉDÉ DE FORMATION D'ARTICLES AVEC DU SEMICARBIDE DE TUNGSTÈNE

(30) Priority: 28.12.2016 IN 201641044655
(43) Date of publication of application: 04.07.2018
(73) Proprietor: General Electric Company, Schenectady, NY 12345 (US)
(72) Inventor: CHIKKABIKKODU HANUM, Sathisha, 560066 Bangalore, Karnataka (IN); MATHEW, Paul, 560066 Bangalore, Karnataka (IN); BISWAS, Ritwik, 560066 Bangalore, Karnataka (IN); CALLA, Eklavya, 560066 Bangalore, Karnataka (IN); DASAN, Biju, 560066 Bangalore, Karnataka (IN); ANAND, Krishnamurthy, 560066 Bangalore, Karnataka (IN)
(74) Representative: BRP Renaud & Partner mbB Rechtsanwälte Patentanwälte Steuerberater

(56) References cited:
- EP-A1- 2 695 974
- DE-A1- 2 161 453
- JP-A- H0 813 116
- VERDON C ET AL: "A STUDY OF HIGH VEOCITY OXY-FUL THERMALLY SPRAYED TUNGSTEN CARBIDE BASED COATINGS. PART 1: MICROSTRUCTURES", MATERIALS SCIENCE AND ENGINEERING: A, ELSEVIER, AMSTERDAM, NL, vol. A246, 1 January 1998 (1998-01-01), pages 11-24, XP002523377, ISSN: 0921-5093, DOI: 10.1016/S0921-5093(97)00759-4

## Description

### FIELD OF THE INVENTION

The present invention is directed to materials, articles, and methods for forming articles. More particularly, the present invention is directed to materials, articles, and methods for forming articles having tungsten semicarbide.

### BACKGROUND OF THE INVENTION

Tungsten carbide is used industrially due to its high hardness and toughness, which may be beneficial properties for any number of uses. Bulk tungsten carbide, typically includes at least two chemical species of tungsten and carbon, actual tungsten carbide (WC) and tungsten semicarbide (W₂C). Bulk tungsten carbide typically includes about 5 vol% to about 10 vol% tungsten semicarbide and about 90 vol% to about 95 vol% actual tungsten carbide. Due to the typically low presence of tungsten semicarbide, the presence of this species is often ignored, particularly as a matter of nomenclature. As such, herein, tungsten carbide is used exclusively to refer to WC, tungsten semicarbide is used exclusively to refer to W₂C, and mixtures of the two are referenced as bulk tungsten carbide. Also, tungsten carbide is known for its high hardness, tungsten semicarbide is actually the harder of the two species. However, tungsten semicarbide is also more brittle than tungsten carbide, which has limited the industrial uses of tungsten semicarbide.

Coal crusher rolls are used to crush coal which is fed to a boiler for producing steam, reducing the size of the coal units from about 20 mm to about 200 mesh size. During the crushing process, the grinding surfaces of the coal crusher rolls become worn due to the inherent abrasive nature of the coal which is being crushed. Coals which have elevated ash content are typically more abrasive than coals with lower ash content, and may cause faster erosion of the grinding surfaces of the coal crusher roles, both by attrition and wear from the crushing loads applied on the coal crusher rolls. Further degradation of the coal crusher rolls may be caused by contaminants in the coal supply such as iron and stone, which may cause sudden impacts when introduced into the coal crusher.

Additionally, during production or operation of coal crusher rolls, cracks may form, either in coatings applied to a substrate of the coal crusher rolls or in the substrates of the coal crusher rolls. The presence of such cracks, either in the substrates or in the coatings applied to the substrates, may increase the rates of attrition and wear during coal crushing operations. Coal crusher rolls may be encased in sinter-cast materials to extend the useful life, but such solutions are expensive and are limited in the increase in useful life they provide.

JPH0813116A describes a surface treatment for metallic parts. EP2695974A1 describes polycrystalline silicon chunks and a method for producing them. DE2161453A1 describes a friction coating for brakes and clutches.

### BRIEF DESCRIPTION OF THE INVENTION

The present invention is defined by the independent claims. Advantageous embodiments are described in dependent claims.

Other features and advantages of the present invention will be apparent from the following more detailed description of the preferred embodiment, taken in conjunction with the accompanying drawings, which illustrate, by way of example, the principles of the invention.

### BRIEF DESCRIPTION OF THE DRAWINGS

FIG. 1 is a perspective view of an article, according to an embodiment of the present disclosure.
FIG. 2 is a sectional view along lines 2-2 of the article of FIG. 1 wherein the article consists of a material, according to an embodiment of the present disclosure.
FIG. 3 is a sectional view along lines 3-3 of the article of FIG. 1 wherein the article includes a material disposed on a substrate, according to an embodiment of the present disclosure.
FIG. 4 is a perspective view of an assembly including an article having a material, according to an embodiment of the present disclosure.

Wherever possible, the same reference numbers will be used throughout the drawings to represent the same parts.

### DETAILED DESCRIPTION OF THE INVENTION

Provided are exemplary materials, articles, and methods for forming the articles. Embodiments of the present disclosure, in comparison to articles and methods not utilizing one or more features disclosed herein, decrease costs, increase process efficiency, increase durability, increase reliability, increase service lifetime, decrease erosion, decrease wear, or a combination thereof.

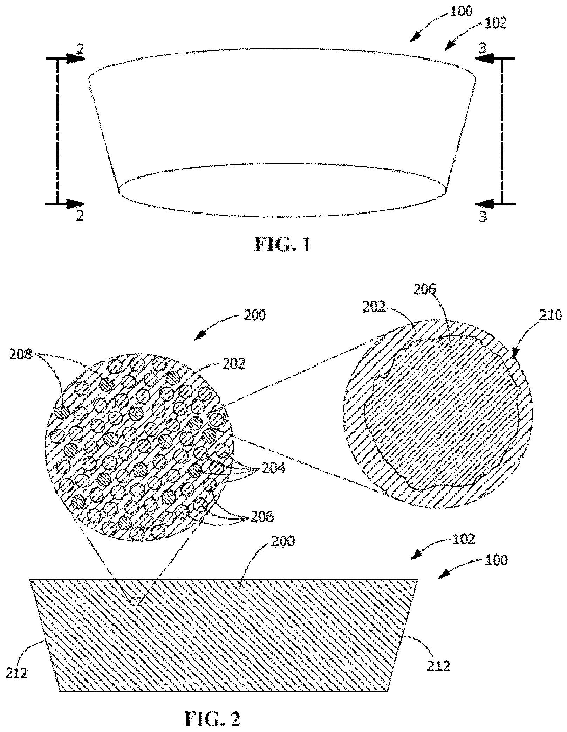

Referring to FIGS. 1 and 2, in one embodiment, an article 100 includes a material 200. The material 200 includes a matrix 202 and a plurality of particles 204 dispersed in the matrix 202. The plurality of particles 204 includes a plurality of tungsten semicarbide particles 206, and the plurality of tungsten semicarbide particles 206 constitutes at least about 30 vol% of the plurality of particles 204.

The plurality of particles 204 may be randomly dispersed in the matrix 202, multi-modally dispersed in the matrix 202, essentially uniformly dispersed in the matrix 202, uniformly dispersed in the matrix 202, dispersed in the matrix 202 per a predetermined pattern, or combinations thereof. As used herein, "multi-modally dispersed" indicates a region having a greater concentration and a region having a lesser concentration, and "essentially uniformly dispersed" indicates a variance in concentration of less than about 20%, alternatively, less than about 15%, alternatively less than about 10%, alternatively less than about 5%, alternatively less than about 1%. "Multi-modally dispersed" further may refer to the distribution of different sizes within the plurality of particles 204.

In one embodiment, the plurality of particles 204 is dispersed in the matrix 202 at a density (average, by weight) of at least about 50%, alternatively at least about 55%, alternatively at least about 60%, alternatively at least about 65%, alternatively at least about 75%, alternatively at least about 80%, alternatively at least about 85%, alternatively at least about 90%, alternatively between about 50% to about 99%, alternatively between about 60% to about 95%, alternatively between about 75% to about 94%, alternatively between about 85% to about 93%, alternatively between about 90% to about 95%, alternatively about 93%.

In addition to the plurality of tungsten semicarbide particles 206, the plurality of particles 204 may include a plurality of tungsten carbide particles 208. Tungsten carbide may include both α-W₂C and β-W₂C in any suitable proportions. According to the invention, the plurality of particles 204 consists essentially of the plurality of tungsten semicarbide particles 206 and the plurality of tungsten carbide particles 208, excluding up to about 5 wt% impurities and decarburization products, alternatively up to about 2 wt%, alternatively up to about 1 wt%, alternatively up to about 0.5 wt%, alternatively up to about 0.1 wt%. In a further embodiment, the plurality of particles 204 consists of the plurality of tungsten semicarbide particles 206 and the plurality of tungsten carbide particles 208. The plurality of tungsten semicarbide particles 206 and the plurality of tungsten carbide particles 208 may, independently, include particles having mixtures of tungsten carbide and tungsten semicarbide, or may include particles having subparticles of tungsten carbide and subparticles of tungsten semicarbide, wherein the subparticles are fused or adhered together, provided that such multiphase arrangements are considered as separate particles for purposes of determining volume percent of tungsten carbide and tungsten semicarbide. In one embodiment, such multiphase arrangements constitute less than about 10 vol% of the plurality of particles 204, alternatively less than about 5 vol%, alternatively less than about 2 vol%, alternatively less than about 1 vol%, alternatively less than about 0.5 vol%, alternatively less than about 0.1 vol%. The plurality of tungsten semicarbide particles 206 may include any suitable particle size. In one embodiment, the plurality of tungsten semicarbide particles 206 includes a maximum particle size of less than about 50 µm, alternatively less than about 250 µm, alternatively less than about 10 µm, alternatively less than about 5 µm, alternatively less than about 1 µm, alternatively less than about 0.5 µm, alternatively less than about 0.1 µm. In another embodiment, the plurality of tungsten semicarbide particles 206 includes a particle size distribution (normal distribution) of between about 1 nm to about 25 µm, alternatively between about 5 nm to about 10 µm, alternatively between about 10 nm to about 5 µm, alternatively between about 20 nm to about 1 µm.

In one example, not forming part of the invention, the material 200 may include a plurality of additional particles (not shown). The plurality of additional particles may be intermixed with the plurality of particles 204 and dispersed in the matrix 202, and may include a plurality of ceramic particles. Suitable ceramic particles may include, but are not limited to, metal carbides, metal borides, metal oxides, boron nitrides, boron carbides, boron carbon nitrides, zirconia toughened aluminas, silicon carbides, silicon nitrides, silicon oxy-nitrides, silicon aluminum oxy-nitrides, or combinations thereof. The plurality of additional particles may include any suitable particle size distribution, including, but not limited to, a particle size distribution of up to about 10 nm, alternatively up to about 20 nm, alternatively up to about 25 nm, alternatively up to about 10 mm, alternatively up to about 20 mm, alternatively up to about 25 mm, alternatively from about 1 nm to about 25 mm, alternatively from about 1 nm to about 25 nm, alternatively from about 1 mm to about 25 mm. In one embodiment, the plurality of additional particles includes fine particles having a fine particle size distribution up to about 25 nm, and coarse particles having a coarse particle size distribution from about 1 mm to about 25 mm, the fine particles and the coarse particles being intermixed. The intermixed fine particles coarse particles may be distributed to optimize protection against erodent abrasive particles having different sizes. The fine particles may also fill in gaps in the plurality of particles 204, thereby enhancing the resistance of the plurality of additional particles to erosion and abrasion.

The plurality of tungsten semicarbide particles 206 may include any suitable conformation including, but not limited to conformations having a reduced occurrence of orthogonal facets relative to a cuboid conformation. In one embodiment, the plurality of tungsten semicarbide particles 206 includes an essentially spheroidal conformation 210. As used herein, "essentially spheroidal" indicates that substantial deviations from a perfect sphere or spheroid are contemplated provided that the overall conformation approximates a sphere or spheroid. Without being bound by theory, it is believed that an essentially spheroidal conformation, having reduced orthogonal and acute facets in comparison to a cuboidal conformation, reduces the susceptibility of the plurality of tungsten semicarbide particles 206 to fracture, thereby decreasing brittleness and increasing toughness of the plurality of tungsten semicarbide particles 206.

According to the invention, the tungsten semicarbide particles 206 constitute at least 30 vol% and up to 90 vol% of the plurality of particles 204, alternatively at least about 40 vol%, alternatively at least about 50 vol%, alternatively at least about 60 vol%, alternatively at least about 70 vol%, alternatively at least about 75 vol%, alternatively at least about 80 vol%, alternatively at least about 85 vol%, alternatively about 90 vol%, alternatively between about 40 vol% to about 95 vol%, alternatively between about 45 vol% to about 92 vol%, alternatively between about 50 vol% to about 90 vol%.

The matrix 202 may include any suitable matrix material, including, but not limited to cobalt, cobalt-chromium alloys, nickel-chromium alloys, nickel-chromium-boron-silicon alloys, cobalt-chromium-boron-silicon alloys, iron-chromium-boron-silicon alloys, Hadfield steel alloys, or combinations thereof.

The article 100 may be any suitable article, including, but not limited to, a grinding article, a grinding roll 102, a coal grinding roll, a gas turbine component, a gas turbine transition piece, a gas turbine liner, a gas turbine liner stop, a gas turbine bully horn, a gas turbine blade (bucket), a gas turbine blade (bucket) tip, a gas turbine shroud, a gas turbine inner shroud, a coal feed pump rotor, a coal feed pump outlet pipe, a cutting tool, a mining drill bit, a rub-resistant abradable article tip, a pump dry seal, or combinations thereof. In one embodiment, wherein the article 100 is a grinding article, the article 100 includes a grinding surface 212 formed by the material 200.

Referring to FIG. 2, in one embodiment, the article 100 consists essentially of the material 200, excluding any coatings disposed on the article 100. In a further embodiment, the article 100 consists of the material 200.

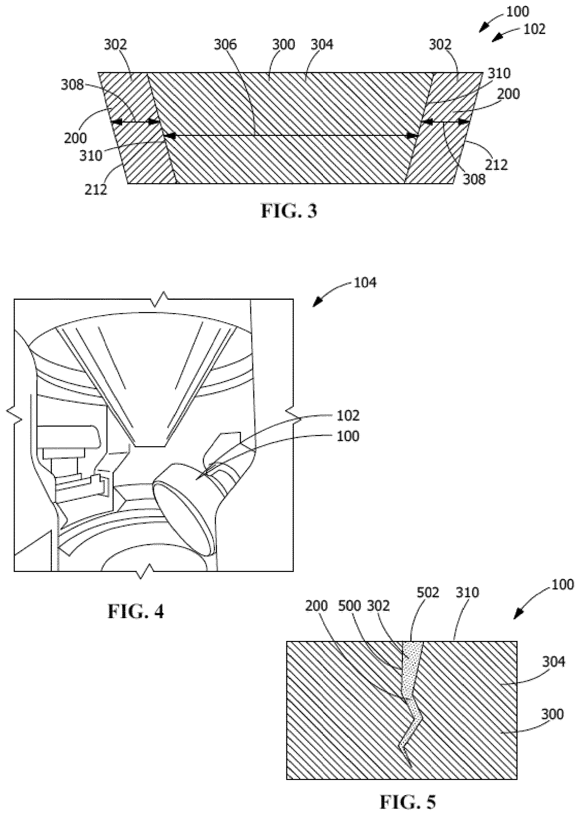

Referring to FIG. 3, in another embodiment, the article 100 includes a substrate 300, and the material 200 forms a layer 302 disposed on the substrate 300. The substrate 300 may include any suitable substrate material 304, including, but not limited to chrome-iron alloy including, by weight, at least about 30% chrome, cast iron, spheroidal graphite iron, white cast iron, cast iron including niobium, cast iron including chromium, cast iron including titanium, iron alloy, steel, Hadfield steel, cast steel, locomotive wheel steel, or combinations thereof. The layer 302 may be disposed directly on a substrate surface 310 of the substrate 300 (shown), or there may be an intermediate layer (not shown) disposed between the layer 302 and the substrate 300. The intermediate layer may include any suitable coating-type, including, but not limited to, a bond coat, an abrasive coating, a grinding coating, a thermal barrier coating, an environmental barrier coating, a diffusion aluminide coating, or combinations thereof. Suitable bond coats include, but are not limited to, molybdenum, Ni-5A1, Ni-20A1, Ni-20Cr, MCrAlY (where M is nickel, cobalt, or iron), or combinations thereof.

The substrate 300 may include any suitable dimensions. In one embodiment, wherein the substrate 300 is a rotatable grinding article, such as, but not limited to, a grinding roll 102, the substrate may include any suitable substrate average diameter 306, including, but not limited to, a substrate average diameter 306 of between about 10 mm and about 3 m, alternatively between about 25 mm and about 2.5 m, alternatively between about 50 mm and about 2 m. The layer 302 may include any suitable layer thickness 308, including, but not limited to, a layer thickness 308 of between about 0.05 mm and about 50 mm, alternatively between about 0.1 mm and about 10 mm, alternatively between about 0.25 mm and about 5 mm, alternatively between about 0.5 mm and about 3 mm.

Referring to FIGS. 1 and 4, the article 100 may be an independent component or the article 100 may be a component, such as a grinding roll 102, of a grinding apparatus 400, such as, but not limited to, a bowl mill, a ball and race mill, a drum and ball mill, a coal crusher, or combinations thereof.

Referring to FIGS. 1-3, in one embodiment, a method for forming an article 100 includes applying a material 200. Applying the material 200 includes forming the matrix 202 and dispersing the plurality of particles 204 in the matrix 202, wherein the plurality of particles 204 include a plurality of tungsten carbide particles 208. The plurality of tungsten carbide particles 208 are at least partially decarburized, transforming at least a portion of the plurality of the tungsten carbide particles 208 into the plurality of tungsten semicarbide particles 206, such that the plurality of tungsten semicarbide particles 206 constitutes at least about 30 vol% of the plurality of particles 204.

Transforming at least the portion of the plurality of tungsten carbide particles 208 into the plurality of tungsten semicarbide particles 206 may include forming the plurality of tungsten semicarbide particles 206 having the essentially spheroidal conformation 210, or the plurality of tungsten carbide particles 208 may include the essentially spheroidal conformation 210 prior to the transforming of at least the portion of the plurality of tungsten carbide particles 208 into the plurality of tungsten semicarbide particles 206. In one embodiment, the plurality of tungsten semicarbide particles 206 are formed having the essentially spheroidal conformation 210 by controlling kinetics and surface activation energies during a thermal spray process, which, along with the thermal spray process itself, may bend, oxidize and dissolve sharp edges. Without being bound by theory, it is believed that oxidizing and dissolving sharp edges transforms the particles to become essentially spheroidal.

According to the invention, forming the matrix 202 and dispersing the plurality of particles 204 in the matrix 202 includes thermally spraying the matrix and the plurality of particles. Any suitable thermal spray technique may be utilized, including, but not limited to, cored wire arc spraying, wire arc spraying, high velocity air fuel spraying, high velocity oxy-fuel spraying, air plasma spraying, twin wire arc spraying, cold spraying, or combinations thereof. In one embodiment, parameters used for forming tungsten semicarbide in a high velocity air fuel spraying process or a high velocity oxy-fuel spraying process include gas flows and ratios which promote higher temperature as well as elevated ratios of oxygen which may induce decarburization of tungsten carbide to tungsten semicarbide. The stoichiometry gas flow may follow the equation 2H₂ + O₂ = 2H₂O, and the amount of oxygen may be controlled to control the amount of tungsten semicarbide formed. Higher amounts of oxygen and higher temperature may, independently, increase decarburization. In another embodiment, parameters for forming tungsten semicarbide in an air plasma spraying process may include increasing power and temperature to increase decarburization. In another embodiment, decarburization may be controlled by adjusting the particle feedstock size used for spraying. Without being bound by theory, it is believed that finer particle sizes decarburize more easily relative to coarser particle sizes, and so the amount of decarburization may be controlled by adjusting a mix of fine and coarse feedstock particles. In one embodiment, fine particles include a size of typically 1 µm or less, and coarse particles include a size of typically about 1 µm to about 5 µm

The method may further include heat treating following thermally spraying the plurality of tungsten carbide particles 208, wherein heat treating at least partially decarburizes the plurality of tungsten carbide particles 208, forming the plurality of tungsten semicarbide particles 206. In one embodiment, heat treating may include a predetermined partial pressure of oxygen to control the phase of tungsten semicarbide formed during decarburization.

Referring to FIGS. 3 and 5, in one embodiment, the method for forming the article 100 includes applying the material 200 to a substrate 300. Referring to FIG. 5, in an embodiment wherein the substrate 300 includes at least one crack 500, the layer 302 may be at least partially disposed within the crack 500, sealing the crack 500. The layer 300 may form a treated surface 502 which is substantially flush with a substrate surface (FIG. 5), or the layer 300 may form a layer 302 which extends over at least a portion of the substrate surface 310 (FIG. 3). As used herein, "substantially flush" indicates that the treated surface 502 is neither elevated nor depressed relative to the substrate surface 310 where they meet by more than about 1 mm.

The invention is limited to the particular embodiment disclosed as the best mode contemplated for carrying out this invention, but will include all embodiments falling within the scope of the appended claims.

## Claims

1. A material (200), comprising:
a matrix (202); and
a plurality of particles (204) dispersed in the matrix (202), the plurality of particles (204) constituting between 50% and 99% by weight of the material (202), the plurality of particles (204) including a plurality of tungsten semicarbide, W₂C, particles (206),
wherein the plurality of tungsten semicarbide, W₂C, particles (206) constitutes at least 30 vol% and up to 90 vol% of the plurality of particles (204),
and
wherein the plurality of particles (204) consists essentially of the plurality of tungsten semicarbide, W₂C, particles (206) and a plurality of tungsten carbide, WC, particles (208).

2. The material (200) as claimed in claim 1, wherein the plurality of tungsten semicarbide, W₂C, particles (206) includes an essentially spheroidal conformation (210).

3. The material (200) as claimed in any one of claims 1 to 2, wherein the plurality of tungsten semicarbide, W₂C, particles (206) constitutes at least 75 vol% of the plurality of particles (204).

4. The material (200) as claimed in any one of claims 1 to 3, wherein the matrix (202) includes a matrix (202) material selected from the group consisting of cobalt, cobalt-chromium alloys, nickel-chromium alloys, nickel-chromium-boron-silicon alloys, cobalt-chromium-boron-silicon alloys, iron-chromium-boron-silicon alloys, Hadfield steel alloys, and combinations thereof.

5. An article (100), comprising:
a material (200), the material (200) including:
a matrix (202); and
a plurality of particles (204) dispersed in the matrix (202), the plurality of particles (204) constituting between 50% and 99% by weight of the material (202), the plurality of particles (204) including a plurality of tungsten semicarbide, W₂C, particles (206),
wherein the plurality of tungsten semicarbide, W₂C, particles (206) constitutes at least 30 vol% and up to 90 vol% of the plurality of particles (204),
and
wherein the plurality of particles (204) consists essentially of the plurality of tungsten semicarbide, W₂C, particles (206) and a plurality of tungsten carbide, WC, particles (208).

6. The article (100) as claimed in claim 5, wherein the plurality of tungsten semicarbide, W₂C, particles (206) includes an essentially spheroidal conformation (210).

7. The article (100) as claimed in any one of claims 5 to 6, wherein the article (100) is a grinding article, and the article (100) includes a grinding surface (212) formed by the material (200).

8. The article (100) as claimed in any one of claims 5 to 7, wherein the article (100) includes a substrate (300), and the material (200) forms a layer disposed on the substrate (300).

9. The article (100) as claimed in any one of claims 5 to 8, wherein the plurality of tungsten semicarbide, W₂C, particles (206) includes a maximum particle size of less than 10 µm.

10. A method for forming an article (100), comprising:
applying a material (200), including:
forming a matrix (202); and
dispersing a plurality of particles (204) in the matrix (202), the plurality of particles (204) constituting between 50% and 99% by weight of the material (202), the plurality of particles (204) including a plurality of tungsten carbide, WC, particles (208);
at least partially decarburizing the plurality of tungsten carbide, WC, particles (208), transforming at least a portion of the plurality of tungsten carbide, WC, particles (208) into a plurality of tungsten semicarbide, W₂C, particles (206) such that the plurality of tungsten semicarbide, W₂C, particles (206) constitutes at least 30 vol% and up to 90 vol% of the plurality of particles (204),
wherein the plurality of particles (204) consists essentially of the plurality of tungsten semicarbide, W₂C, particles (206) and a plurality of tungsten carbide, WC, particles (208) and;
wherein forming the matrix (202) and dispersing the plurality of particles (204) in the matrix (202) includes thermally spraying the matrix (202) and the plurality of particles (204).

11. The method as claimed in claim 10, wherein transforming at least the portion of the tungsten carbide, WC, particles (208) into the plurality of tungsten semicarbide, W₂C, particles (206) includes forming the plurality of tungsten semicarbide, W₂C, particles (206) having an essentially spheroidal conformation (210).

12. The method as claimed in claim 10 or 11, wherein the method of thermally spraying is selected from the group consisting of cored wire arc spraying, wire arc spraying, high velocity air fuel spraying, high velocity oxy-fuel spraying, air plasma spraying, twin wire arc spraying, cold spraying, and combinations thereof.

13. The method as claimed in any one of claims 10 to 12, further including heat treating following applying the material (200), wherein heat treating at least partially decarburizes the plurality of tungsten carbide, WC, particles (208).

## Patentansprüche

1. Material (200), umfassend:
eine Matrix (202); und
eine Vielzahl von Partikeln (204), die in der Matrix (202) dispergiert sind, wobei die Vielzahl von Partikeln (204) zwischen 50 Gew.-% und 99 Gew.-% des Materials (202) ausmacht, wobei die Vielzahl von Partikeln (204) eine Vielzahl von Diwolframcarbid-, W₂C-, Partikeln (206) einschließt,
wobei die Vielzahl von Diwolframcarbid-, W₂C-, Partikeln (206) mindestens 30 Vol.-% und bis zu 90 Vol.-% der Vielzahl von Partikeln (204) ausmacht, und
wobei die Vielzahl von Partikeln (204) im Wesentlichen aus der Vielzahl von Diwolframcarbid-, W₂C-, Partikeln (206) und einer Vielzahl von Wolframcarbid-, WC-, Partikeln (208) besteht.

2. Material (200) nach Anspruch 1, wobei die Vielzahl von Diwolframcarbid-, W₂C-, Partikeln (206) eine im Wesentlichen kugelförmige Konformation (210) einschließt.

3. Material (200) nach einem der Ansprüche 1 bis 2, wobei die Vielzahl von Diwolframcarbid-, W₂C-, Partikeln (206) mindestens 75 Vol.-% der Vielzahl von Partikeln (204) ausmacht.

4. Material (200) nach einem der Ansprüche 1 bis 3, wobei die Matrix (202) ein Material der Matrix (202) aufweist, das aus der Gruppe ausgewählt ist, die aus Kobalt, Kobalt-Chrom-Legierungen, Nickel-Chrom-Legierungen, Nickel-Chrom-Bor-Silizium-Legierungen, Kobalt-Chrom-Bor-Silizium-Legierungen, Eisen-Chrom-Bor-Silizium-Legierungen, Hadfield-Stahllegierungen und Kombinationen davon besteht.

5. Artikel (100), umfassend:
ein Material (200), wobei das Material (200) Folgendes einschließt:
eine Matrix (202); und
eine Vielzahl von Partikeln (204), die in der Matrix (202) dispergiert sind, wobei die Vielzahl von Partikeln (204) zwischen 50 Gew.-% und 99 Gew.-% des Materials (202) ausmacht, wobei die Vielzahl von Partikeln (204) eine Vielzahl von Diwolframcarbid-, W₂C-, Partikeln (206) einschließt,
wobei die Vielzahl von Diwolframcarbid-, W₂C-, Partikeln (206) mindestens 30 Vol.-% und bis zu 90 Vol.-% der Vielzahl von Partikeln (204) ausmacht, und
wobei die Vielzahl von Partikeln (204) im Wesentlichen aus der Vielzahl von Diwolframcarbid-, W₂C-, Partikeln (206) und einer Vielzahl von Wolframcarbid-, WC-, Partikeln (208) besteht.

6. Artikel (100) nach Anspruch 5, wobei die Vielzahl von Diwolframcarbid-, W₂C-, Partikeln (206) eine im Wesentlichen kugelförmige Konformation (210) einschließt.

7. Artikel (100) nach einem der Ansprüche 5 bis 6, wobei der Artikel (100) ein Schleifartikel ist und der Artikel (100) eine Schleiffläche (212) aufweist, die durch das Material (200) gebildet ist.

8. Artikel (100) nach einem der Ansprüche 5 bis 7, wobei der Artikel (100) ein Substrat (300) aufweist und das Material (200) eine auf dem Substrat (300) angeordnete Schicht bildet.

9. Artikel (100) nach einem der Ansprüche 5 bis 8, wobei die Vielzahl von Diwolframcarbid-, W₂C-, Partikeln (206) eine maximale Partikelgröße von weniger als 10 µm einschließt.

10. Verfahren zum Bilden eines Artikels (100), umfassend:
Auftragen eines Materials (200), einschließlich:
Bilden einer Matrix (202); und
Dispergieren einer Vielzahl von Partikeln (204) in der Matrix (202), wobei die Vielzahl von Partikeln (204) zwischen 50 Gew.-% und 99 Gew.-% des Materials (202) ausmacht, wobei die Vielzahl von Partikeln (204) eine Vielzahl von Wolframcarbid-, WC-, Partikeln (208) einschließt;
zumindest teilweises Entkohlen der Vielzahl von Wolframcarbid-, WC-, Partikeln (208), Umwandeln mindestens eines Teils der Vielzahl von Wolframcarbid-, WC-, Partikeln (208) in eine Vielzahl von Diwolframcarbid-, W₂C-, Partikeln (206), sodass die Vielzahl von Diwolframcarbid-, W₂C-, Partikeln (206) mindestens 30 Vol.-% und bis zu 90 Vol.-% der Vielzahl von Partikeln (204) ausmacht,
wobei die Vielzahl von Partikeln (204) im Wesentlichen aus der Vielzahl von Diwolframcarbid-, W₂C-, Partikeln (206) und einer Vielzahl von Wolframcarbid-, WC-, Partikeln, (208) besteht; und
wobei das Bilden der Matrix (202) und das Dispergieren der Vielzahl von Partikeln (204) in der Matrix (202) das thermische Spritzen der Matrix (202) und der Vielzahl von Partikeln (204) einschließt.

11. Verfahren nach Anspruch 10, wobei das Umwandeln mindestens des Teils der Wolframcarbid-, WC-, Partikel (208) in die Vielzahl von Diwolframcarbid-, W₂C-, Partikeln (206) das Bilden der Vielzahl von Diwolframcarbid-, W₂C-, Partikeln (206) mit einer im Wesentlichen kugelförmigen Konformation (210) einschließt.

12. Verfahren nach Anspruch 10 oder 11, wobei das Verfahren des thermischen Spritzens aus der Gruppe ausgewählt ist, die aus Fülldraht-Lichtbogenspritzen, Draht-Lichtbogenspritzen, Hochgeschwindigkeits-Luft-Brenngasspritzen, Hochgeschwindigkeits-Sauerstoff-Brenngasspritzen, Luft-Plasmaspritzen, Doppeldraht-Lichtbogenspritzen, Kaltgasspritzen und Kombinationen davon besteht.

13. Verfahren nach einem der Ansprüche 10 bis 12, ferner umfassend Wärmebehandeln nach dem Aufbringen des Materials (200), wobei das Wärmebehandeln die Vielzahl von Wolframcarbid-, WC-, Partikeln (208) zumindest teilweise entkohlt.

## Revendications

1. Matériau (200), comprenant :
une matrice (202) ; et
une pluralité de particules (204) dispersées dans la matrice (202), la pluralité de particules (204) constituant entre 50 % et 99 % en poids du matériau (202), la pluralité de particules (204) incluant une pluralité de particules de semi-carbure de tungstène,, W₂C, (206) ;
dans lequel la pluralité de particules de semi-carbure de tungstène,
W₂C, (206) constituent au moins 30 % en volume et jusqu'à 90 % en volume de la pluralité de particules (204), et
dans lequel la pluralité de particules (204) est constituée sensiblement par la pluralité de particules de semi-carbure de tungstène, W₂C,(206) et d'une pluralité de particules de carbure de tungstène, WC (208).

2. Matériau (200) selon la revendication 1, dans lequel la pluralité de particules de semi-carbure de tungstène, W₂C, (206) inclut une forme essentiellement sphéroïdale (210).

3. Matériau (200) selon l'une quelconque des revendications 1 à 2, dans lequel la pluralité de particules de semi-carbure de tungstène, W₂C, (206) constituent au moins 75 % en volume de la pluralité de particules (204).

4. Matériau (200) selon l'une quelconque des revendications 1 à 3, dans lequel la matrice (202) inclut un matériau de matrice (202) choisi dans le groupe constitué par le cobalt, des alliages de chrome-cobalt, des alliages de nickel-chrome, des alliages de nickel-chrome-bore-silicium, des alliages de cobalt-chrome-bore-silicium, des alliages de fer-chrome-bore-silicium, des alliages d'acier de Hadfield, et leurs combinaisons.

5. Article (100), comprenant :
un matériau (200), le matériau (200) incluant :
une matrice (202) ; et
une pluralité de particules (204) dispersées dans la matrice (202), la pluralité de particules (204) constituant entre 50 % et 99 % en poids du matériau (202), la pluralité de particules (204) incluant une pluralité de particules de semi-carbure de tungstène,, W₂C, (206) ;
dans lequel la pluralité de particules de semi-carbure de tungstène,
W₂C, (206) constituent au moins 30 % en volume et jusqu'à 90 % en volume de la pluralité de particules (204), et
dans lequel la pluralité de particules (204) est constituée sensiblement par la pluralité de particules de semi-carbure de tungstène, W₂C, (206) et d'une pluralité de particules de carbure de tungstène, WC (208).

6. Article (100) selon la revendication 5, dans lequel la pluralité de particules de semi-carbure de tungstène, W₂C, (206) inclut une forme essentiellement sphéroïdale (210).

7. Article (100) selon l'une quelconque des revendications 5 à 6, dans lequel l'article (100) est un article de meulage, et l'article (100) inclut une surface de meulage (212) formée par le matériau (200).

8. Article (100) selon l'une quelconque des revendications 5 à 7, dans lequel l'article (100) inclut un substrat (300), et le matériau (200) forme une couche disposée sur le substrat (300).

9. Article (100) selon l'une quelconque des revendications 5 à 8, dans lequel la pluralité de particules de semi-carbure de tungstène, W₂C, (206) inclut une taille de particule maximale inférieure à 10 µm.

10. Procédé de formation d'un article (100), comprenant :
l'application d'un matériau (200), incluant :
la formation d'une matrice (202) ; et
la dispersion d'une pluralité de particules (204) dans la matrice (202), la pluralité de particules (204) constituant entre 50 % et 99 % en poids du matériau (202), la pluralité de particules (204) incluant une pluralité de particules de carbure de tungstène, WC, (208) ;
la décarburation au moins partielle de la pluralité de particules de carbure de tungstène, WC, (208), la transformation d'au moins une partie de la pluralité de particules de carbure de tungstène, WC, (208) en une pluralité de particules de semi-carbure de tungstène, W₂C, de sorte que la pluralité de particules de semi-carbure de tungstène, W₂C, (206) constituent au moins 30 % en volume et jusqu'à 90 % en volume de la pluralité de particules (204),
dans lequel la pluralité de particules (204) est constituée sensiblement par la pluralité de particules de semi-carbure de tungstène, W₂C, (206) et par une pluralité de particules de carbure de tungstène, WC, (208) et ;
dans lequel la formation de la matrice (202) et la dispersion de la pluralité de particules (204) dans la matrice (202) incluent la pulvérisation thermique de la matrice (202) et de la pluralité de particules (204).

11. Procédé selon la revendication 10, dans lequel la transformation d'au moins la partie des particules de carbure de tungstène, WC, (208) dans la pluralité de particules de semi-carbure de tungstène, W₂C, (206) inclut la formation de la pluralité de particules de semi-carbure de tungstène, W₂C, (206) présentant une forme essentiellement sphéroïdale (210).

12. Procédé selon la revendication 10 ou 11, dans lequel le procédé de pulvérisation thermique est choisi dans le groupe constitué de pulvérisation à l'arc à partir de fils fourrés, une pulvérisation électrique au fil, une pulvérisation de combustible-air à grande vitesse, une pulvérisation d'oxy-combustible à grande vitesse, une pulvérisation au plasma d'air, une pulvérisation à l'air à partir de fils doubles, une pulvérisation à froid, et leurs combinaisons.

13. Procédé selon l'une quelconque des revendications 10 à 12, incluant en outre le traitement thermique après l'application du matériau (200), dans lequel le traitement thermique provoque la décarburation au moins partielle de la pluralité de particules de carbure de tungstène, WC, (208).
